(19) Europäisches Patentamt

European Patent Office

Office européen des brevets

(11) **EP 0 913 318 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.⁷: **B62D 7/09**

(21) Anmeldenummer: **98120720.2**

(22) Anmeldetag: **31.10.1998**

(54) **Hinterachslenkvorrichtung**

Rear axle steering

Direction pour essieu arrière

(84) Benannte Vertragsstaaten:
**AT DE FR GB IT NL SE**

(30) Priorität: **03.11.1997 DE 19748474**

(43) Veröffentlichungstag der Anmeldung:
**06.05.1999 Patentblatt 1999/18**

(73) Patentinhaber: **Horst Staiger & Söhne GmbH 78126 Königsfeld-Erdmannsweiler (DE)**

(72) Erfinder: **Staiger, Freddy 78126 Königsfeld-Erdmannsweiler (DE)**

(74) Vertreter: **Patentanwälte Westphal, Mussgnug & Partner Waldstrasse 33 78048 Villingen-Schwenningen (DE)**

(56) Entgegenhaltungen:
**EP-A- 0 794 104       DE-A- 2 434 363**
**DE-U- 1 803 417       US-A- 2 875 842**
**US-A- 2 913 063**

## Beschreibung

Die vorliegende Erfindung betrifft eine Hinterachslenkvorrichtung gemäß den Merkmalen des Oberbegriffs des Anspruchs 1.

Die DE-U-1803417 beschreibt eine solche asymmetrische Lenkvorrichtung, bei der zwei beabstandet angeordnete Räder jeweils mit unrunden Triebscheiben verbunden sind, die mittels eines Zuggliedes gekoppelt sind.

Aus der US-A-2875842 ist eine Lenkvorrichtung bekannt, bei der zwei beabstandet angeordnete Räder jeweils mit runden Zahnscheiben gekoppelt sind, wobei jede der Zahnscheiben außerhalb ihrer Mitte an einer Lenkachse jeweils eines der Räder befestigt ist. Die Zahnscheiben sind mittels einer Kette zwangsgekoppelt.

Aus der DE-A-2434363 ist eine Lenkvorrichtung bekannt, bei der zwei beabstandet angeordnete Räder jeweils mit einem kreisförmigen Lenkelement gekoppelt sind. Die Lenkelemente sind dabei mittels einer Kette gekoppelt, die zwischen den Lenkelementen über eine Nockenscheibe und wenigstens drei Treibräder geführt ist, wobei letztere an den Ecken eines gleichschenkligen Dreiecks angeordnet sind, das innerhalb einer Symmetrieachse der Lenkvorrichtung eine Hin- und Herbewegung ausführt, um ein unterschiedlich starkes Einschlagen der Räder zu bewirken.

Schließlich ist aus der EP-A-794104 ein elektromotorisches Fahrzeug mit zwei lenkbaren Rädern bekannt, die jeweils mit einem kreisförmigen Zahnrad verbunden sind. Die Zahnräder stehen dabei jeweils im Eingriff mit einem weiteren Zahnrad, wobei diese Zahnräder mittels einer Stange gekoppelt sind.

Die DE-A-4025543 beschreibt eine Lenkvorrichtung bei der Räder jeweils an einem drehbar an einem Achskörper gelagerten Drehschemel befestigt sind. Ein Lenken der Räder erfolgt durch Drehen der Drehschemel mittels jeweils eines Hydraulikzylinders. Um ein Radieren der Räder beim Lenken eines vierrädrigen Fahrzeuges zu verhindern, muß das Lenken der beiden lenkbaren Räder so aufeinander abgestimmt erfolgen, daß sich Verlängerungen der beiden Radachsen auf einer zwei Vorderräder verbindenden Achse, bzw. in der Verlängerung dieser Achse, schneiden. Dies macht eine komplizierte Steuerung der beiden die Lenkung bewirkenden Hydraulikzylinder erforderlich.

Aufgabe der vorliegenden Erfindung ist es, eine Hinterachslenkvorrichtung zur Verfügung zu stellen, die mit einfachen Mitteln realisierbar ist und dennoch ein präzises Lenken des die Hinterachslenkvorrichtung aufweisenden Fahrzeuges ohne Radieren der Räder ermöglicht.

Dieses Ziel wird durch eine Hinterachslenkvorrichtung gemäß den Merkmalen des Anspruchs 1 erreicht.

Die Zwangskopplung der Lenkelemente bewirkt, daß bei einem - wie auch immer bewirkten -Lenken eines Rades das andere Rad entsprechend mitgelenkt wird. Der gegenüber dem kurvenäußeren lenkbaren Rad stärkere Lenkeinschlag des kurveninneren lenkbaren Rades resultiert daraus, daß die Umfangsbereiche des kurvenäußeren Lenkelements und des kurveninneren Lenkelements, auf die das Kopplungselement bei Verdrehen der Lenkelemente zuläuft, bzw. in die das Kopplungselement neu eingreift, eine unterschiedliche Krümmung aufweisen. Die erfindungsgemäße Hinterachslenkvorrichtung erfordert daher lediglich zwei hinsichtlich ihrer Umfangskonturen aufeinander abgestimmte Lenkelemente, durch welche die Hinterachslenkvorrichtung nach der Herstellung ohne aufwendige Steuerung sicher und zuverlässig funktioniert.

Vorteilhafterweise ist das die beiden Lenkelemente zwangskoppelnde Kopplungselement eine Kette, ein Zahnriemen oder dergleichen. Diese gewährleisten eine sichere, schlupffreie Kraftübertragung zwischen den beiden Lenkelementen. Die Lenkelemente besitzen an das verwendete Kopplungselement angepaßte Strukturierungen, insbesondere Zähne, zum Eingreifen des Kopplungselementes.

Ein Lenken kann im einfachsten Fall durch Verdrehen eines der Lenkelemente, beispielsweise mittels einer drehfest daran gekoppelten Welle erfolgen. Das Lenken erfolgt mittels eines Steuerelementes, an welches ein Steuerrad gekoppelt ist. Das Steuerelement greift beabstandet zu den Lenkelementen in das Kopplungselement ein und setzt Drehbewegungen des Steuerrades in Translationsbewegungen des Kopplungselementes um, wobei die Translationsbewegungen des Kopplungselementes wiederum Drehbewegungen der beiden Lenkelemente und damit Lenkbewegungen der Räder bewirken. Das Steuerelement ist vorzugsweise extentrisch zu einer Drehachse angeordnet und bewirkt neben einer Umsetzung von Drehbewegungen des Steuerrades in Translationsbewegungen des Kopplungselementes eine gleichmäßige Straffung des Kopplungselementes. Die Straffung ist erforderlich, da die Lenkelemente fest um eine Achse drehbar gelagert sind und deren Umfangsbereiche unterschiedlich stark gekrümmt sind, was abhängig vom Lenkeinschlag der Räder ohne straffende Mittel ein mehr oder weniger starkes Durchhängen des Kopplungselementes bewirken würde. Die Ausgestaltung des Steuerelementes zum gleichzeitigen Bewirken von Lenkbewegungen und Straffhalten des Kopplungselementes ist insbesondere im Hinblick auf eine Reduktion der erforderlichen Bauteile vorteilhaft.

Zur direkten Umsetzung von Drehbewegungen der Lenkelemente ohne weitere Getriebemaßnahmen in Lenkbewegungen der Räder ist vorgesehen, die Lenkelemente so anzuordnen, daß die Radaufstandspunkte der beiden lenkbaren Räder in Verlängerung der Drehachse des jeweiligen Lenkelementes liegen.

Die Lenkelemente sind in Geradeausstellung der Räder symmetrisch bzgl. einer parallel zur Fahrtrichtung verlaufenden Achse angeordnet. Sie weisen nach einer Ausführungsform der Erfindung jeweils zwei unterschiedlich gekrümmte Umfangsbereiche auf, die stetig ineinander übergehen. Vorteilhafterweise ist einer der beiden gekrümmten Umfangsbereiche als Kreisabschnitt, insbesondere als Halbkreis ausgebildet.

Die vorliegende Erfindung ermöglicht ein exaktes Lenken des Fahrzeuges, bei welchem sie eingesetzt ist. Der Wenderadius des Fahrzeuges nimmt mit zunehmendem Lenkeinschlag ab, der sogenannte Rollmittelpunkt, um welchen sich alle vier Räder bei eingeschlagener Lenkung bewegen, wandert je nach Lenkein schlag in Verlängerung der Achsen der beiden Vorderräder. Bei maximalem Lenkeinschlag und minimalem Wenderadius befindet sich der Rollmittelpunkt in der Mitte zwischen den beiden Vorderrädern. Um allzu große Geschwindigkeiten bei derart kleinen Wenderadien zu vermeiden, und damit eine Gefährdung des Fahrers bzw. der Umgebung zu vermeiden, ist vorgesehen, daß Mittel zur Geschwindigkeitssteuerung an das Steuerelement der Hinterachslenkvorrichtung gekoppelt sind, wobei die maximal zulässige Geschwindigkeit mit zunehmender Verdrehung des Steuerelementes abnimmt.

Die vorliegende Erfindung wird nachfolgend anhand von Ausführungsbeispielen mittels Figuren näher erläutert. Es zeigen

Figur 1: ein erstes Ausführungsbeispiel einer erfindungsgemäßen Hinterachslenkvorrichtung in Vorderansicht,

Figuren 2 bis 5: erfirdungsgemäße Hinterachslenkvorrichtung in Draufsicht in verschiedenen Lenkstellungen,

Figur 6: Veranschaulichung der Fahrzeuggeometrie als Grundlage bei der Bestimmung der Umfangsbereiche der Lenkelemente.

In den Figuren bezeichnen, sofern nicht anders angegeben, gleiche Bezugszeichen gleiche Teile mit gleicher Bedeutung.

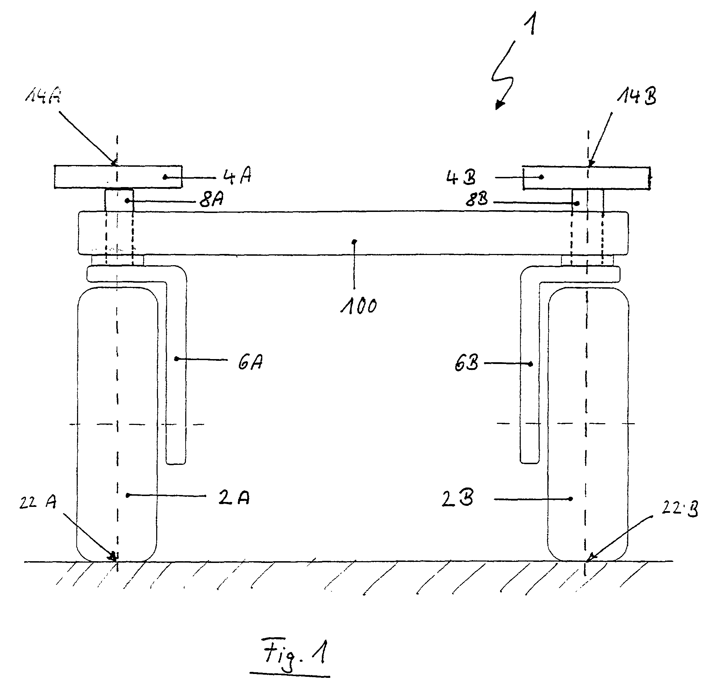

Eine in Figur 1 in Vorderansicht dargestellte erfindungsgemäße Hinterachslenkvorrichtung besitzt zwei beabstandet zueinander angeordnete lenkbare Räder 2A, 2B. Jeweils ein Lenkelement 4A; 4B ist mit einem Rad 2A; 2B verdrehfest gekoppelt, wobei die Kopplung mittels zweier einen Achskörper 100 durchsetzender Wellen 8A, 8B erfolgt, die verdrehfest mit die Räder 2A, 2B tragenden Gabeln 6A, 6B verbunden sind. Die Lenkelemente 4A, 4B sind im Wesentlichen scheibenförmig ausgebildet, wobei sie über ein an ihren Umfangsflächen angreifendes, in Figur 1 nicht dargestelltes, Kopplungselement zwangsgekoppelt sind. Radaufstandspunkte 22A, 22B der Räder 2A, 2B befinden sich bei dem dargestellten Ausführungsbeispiel der Hinterachslenkvorrichtung in Verlängerung von Drehachsen 14A, 14B der Lenkelemente 4A, 4B.

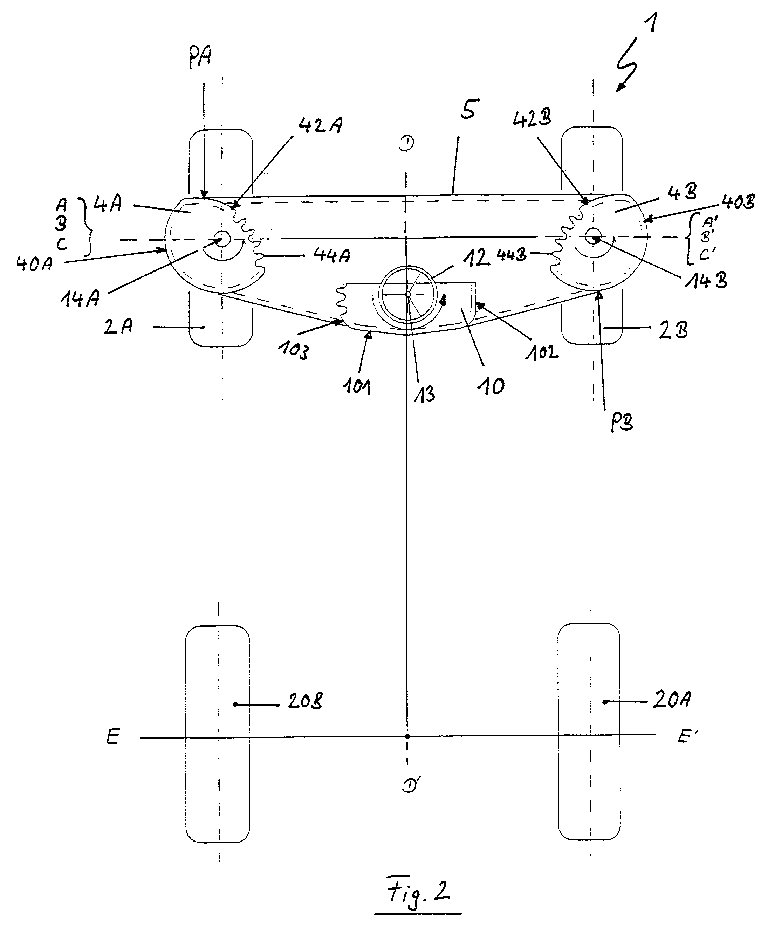

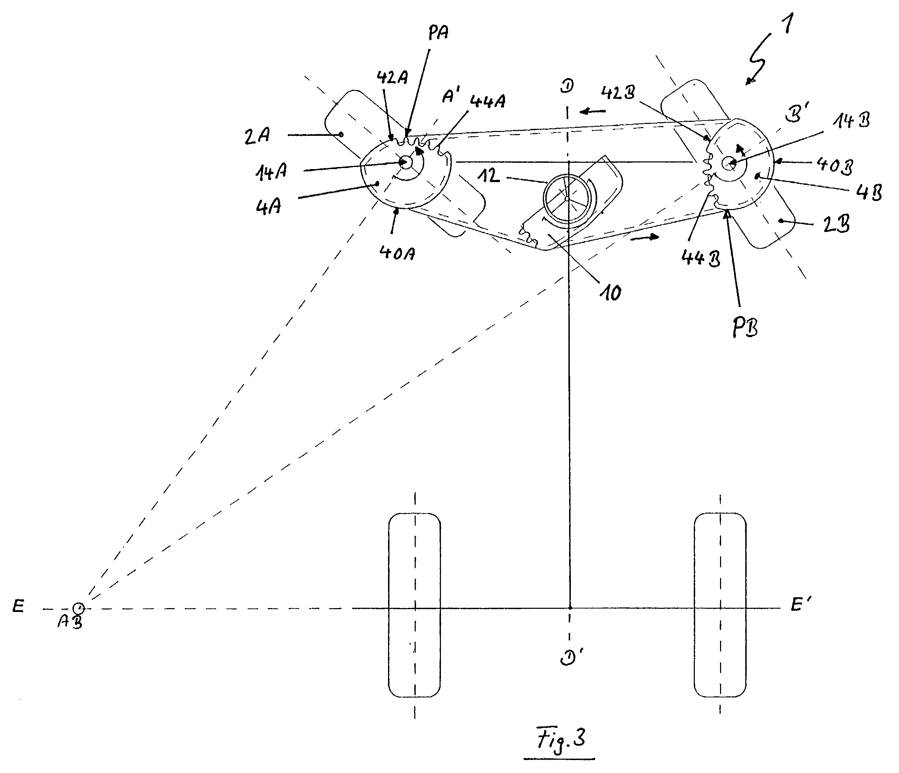

Die erfindungsgemäße Hinterachslenkvorrichtung 1 ist in den Figuren 2 bis 5 in Draufsicht für verschiedene Lenkstellungen der beiden lenkbaren Räder 2A, 2B dargestellt. Aus Gründen der Übersichtlichkeit sind lediglich die Räder 2A, 2B, die Lenkelemente 4A, 4B, das Kopplungselement 5 und ein Steuerelement 10 dargestellt. Auf die Darstellung des in Figur 1 dargestellten Achskörpers sowie weiterer Befestigungs- und Lagermittel wurde verzichtet. Zur Veranschaulichung des Lenkvorgangs sind in den Figuren 2 bis 4 ferner zwei Vorderräder 20A, 20B dargestellt, die starr an einer nicht näher dargestellten, in Richtung der Linie EE' verlaufenden Achse angeordnet sind. Notwendige Längsträger zur Verbindung eines vorderen die Vorderräder 20A, 20B tragenden Achskörpers und des hinteren Achskörpers sind ebenfalls nicht dargestellt. Der Abstand zwischen den Drehachsen 14A, 14B der Lenkelemente 4A, 4B und den Vorderrädern 20A, 20B ist konstant.

Die beiden Lenkelemente 4A, 4B weisen jeweils zwei unterschiedlich gekrümmte Umfangsbereiche 40A, 42A, 40B, 42B auf. Die Kopplungselemente 4A, 4B sind in den dargestellten Beispielen mittels eines eine geschlossene Kurve bildenden Kopplungselementes 5 zwangsgekoppelt, wobei das Kopplungselement 5 in die Umfangsbereiche 40A, 42A, 40B, 42B der Kopplungselemente 4A, 4B eingreift. Eine Drehbewegung eines der beiden Lenkelemente 4A; 4B bewirkt bedingt durch die Zwangskopplung auch eine Drehbewegung des anderen Lenkelements 4B; 4A. Das dargestellte Kopplungselement 5 ist als Kette oder Zahnriemen ausgebildet, welcher in Zähne 44A, 44B der Lenkelemente 4A, 4B eingreift und damit eine sichere Kopplung der Lenkelemente 4A, 4B bewirkt.

Die beiden unterschiedlich gekrümmten Umfangsbereiche 40A, 42A, 40B, 42B jeweils cines der Lenkelemente 4A; 4B gehen stetig ineinander über.

Ein um eine Achse 13 drehbar gelagertes Steuerelement 10 greift zwischen den beiden Lenkelementen 4A, 4B in das Kopplungselement 5 ein. Drehbewegungen des Steuerelements 10 werden in Translationsbewegungen des Kopplunpselementes 5 umgesetzt, welche wiederum Drehbewegungen der Lenkelemente 4A, 4B und damit Lenkbewegungen der verdrehfest mit den Lenkelementen 4A, 4B gekoppelten Räder 2A, 2B bewirken. Zum Einleiten derartiger Lenkbewegungen ist das Steuerelement 10 beispielsweise mit einem Steuerrad 12 verdrehfest verbunden, welches, im einfachsten. Fall, an einer Welle in Verlängerung der Drehachse 13 des Steuerelementes 10 angebracht ist.

Um beim Lenken des Fahrzeuges ein Radieren der Räder 2A, 2B, 20A, 20B zu verhindern, müssen sich Verlängerungen der Radachsen AA', BB' der beiden lenkbaren Räder 2A, 2B und die Verlängerung der Radachse EE' der beiden starren Vorderräder 20A, 20B für jeden Lenkeinschlag in einem Punkt M, dem sogenannten Rollenmittelpunkt, schneiden.

Ein hierfür erforderlicher stärkerer Lenkeinschlag des jeweils kurveninneren Rades 2A gegenüber dem kurvenäußeren Rad 2B wird dadurch erreicht, daß die Krümmung der Umfangsbereiche 40B, 42A, in welche das auf die Lenkelemente 4A, 4B zulaufende Kopplungselement 5 neu eingreift, unterschiedliche Krümmungen besitzen. So greift bei Verdrehen des Steuerelements 10 entgegen dem Uhrzeigersinn, und einem sich damit in Richtung des eingezeichneten Pfeils bewegenden Kopplungselement 5, das Kopplungselement 5 nur in Abschnitte desselben Umfangsbereiches 40B des Lenkelementes 4B des kurvenäußeren Rades 2B und nur in Abschnitte desselben Umfangsbereiches 42A des Lenkelementes 4A des kurveninneren Rades 2A neu ein. Das Verhältnis der Winkelbewegungen des kurvenäußeren Rades 2B und des kurveninneren Rades 2A, die durch eine translatorische Bewegung des Kopplungselementes 5 hervorgerufen wird, ergibt sich aus dem Verhältnis der jeweiligen Abstände zwischen der Drehachse 14A, 14B und der Umfangsbereichspunkte PA und PB, in welche der sich auf die Lenkelemente 4A, 4B zubewegende Teil des Kopplungselementes 5 gerade neu eingreift.

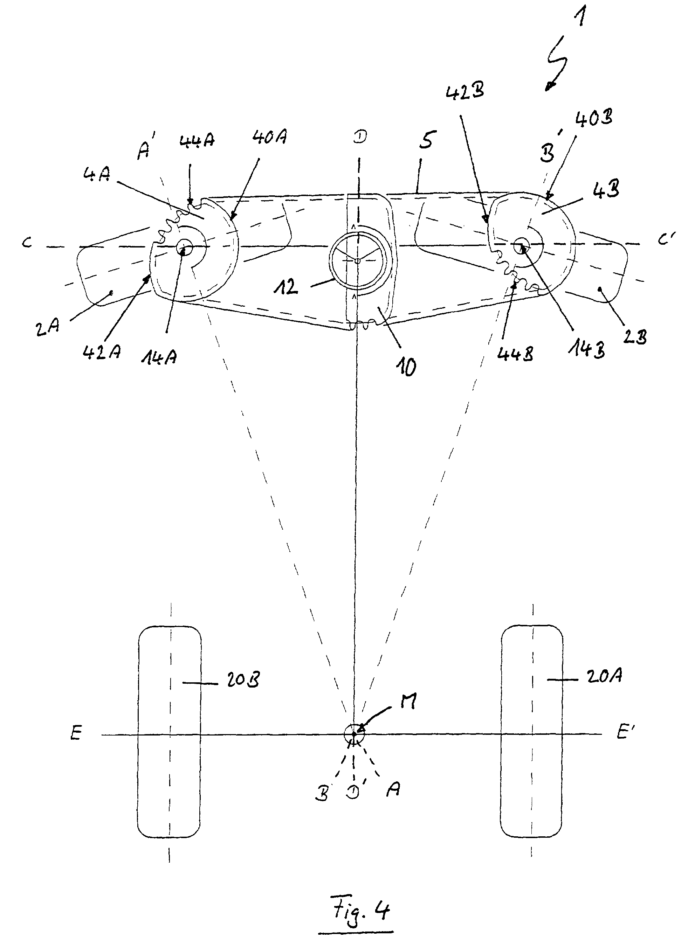

Die beiden Lenkelemente 4A, 4B sind in Geradeausstellung (Figur 2) symmetrisch bzgl. einer in Fahrtrichtung verlaufenden Fahrzeugachse DD' angeordnet. In Geradeausstellung greift das Kopplungselement 5 an beiden Umfangsbereichen 40A, 42A, 40B, 42B der beiden Lenkelemente 4A, 4B radial an. Die Lenkelemente 4A, 4B sind so aufeinander abgestimmt, daß in maximaler Lenkstellung (Figur 4), wenn sich die Radachsen AA', BB' der beiden lenkbaren Räder 2A, 2B in der Mitte zwischen den beiden Vorderrädern 20A, 20B schneiden, das Kopplungselement 5 gerade noch ausschließlich in den für die jeweilige Drehbewegung verantwortlichen Umfangsbereich neu eingreift.

Bei den Lenkelementen 4A, 4B in dem dargestellten Ausführungsbeispiel ist der für die Drehbewegung des jeweils kurvenäußeren Rades 2A; 2B verantwortliche Umfangsbereich 40A; 40B als Halbkreis ausgebildet. Der jeweils andere Umfangsbereich 42A; 42B ist ellipsenförmig ausgebildet, wobei die Umfangsbereiche 40A, 42A, 40B, 42B eines Lenkelementes 4A, 4B jeweils stetig ineinander übergehen.

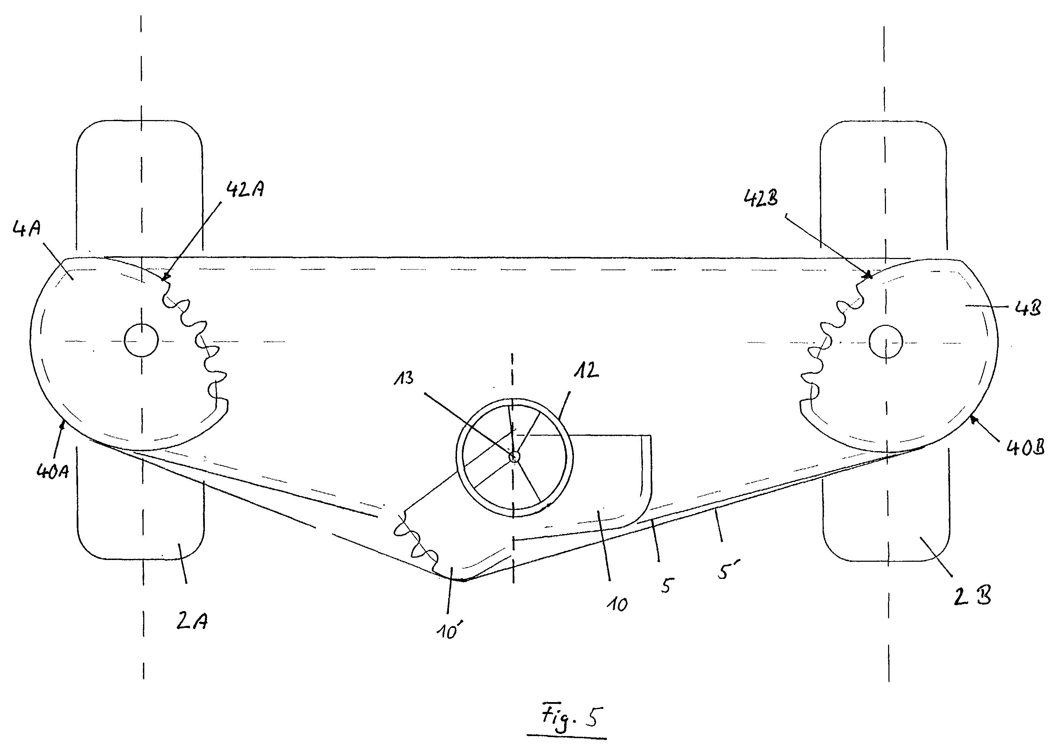

Das Steuerelement 10 dient neben der Umsetzung von Drehbewegungen des Steuerrades 12 in Translationsbewegungen des Kopplungselementes 5 dazu, das Kopplungselement 5 für beliebige Lenkstellungen der Räder 2A, 2B bzw. der Lenkelemente 4A, 4B straff zu halten. Das in den Figuren dargestellte Steuerelement 10 ist im wesentlichen rechteckförmig mit abgerundeten Ecken ausgebildet, wobei es an drei Seiten 101, 102, 103 Zähne zum Eingreifen in das Kopplungselement 5 aufweist. Die Funktionsweise des Steuerelementes 10 zum Straffen des Kopplungselementes 5 ist in Figur 5 veranschaulicht. Das Steuerelement ist hier für zwei Lenkstellungen dargestellt, im rechten Teil in Geradeausstellung, im linken Teil in eingelenkter Stellung. Steuerelement und Kopplungselement sind in Figur 5 in eingelenkter Stellung durch Bezugszeichen mit hochgesetztem Strich gekennzeichnet. Die Länge des Abschnittes des Kopplungselementes 5, 5', welcher sich zwischen den Lenkelementen 4A, 4B über das Kopplungselement 10, 10' erstreckt, nimmt bei eingelenktem Steuerelement 10' gegenüber der Geradeausstellung des Steuerelements 10 zu. Dieser Längenausgleich ist erforderlich, um mit zunehmendem Eingreifen des Kopplungselementes 5 in den schwächer gekrümmten Umfangsbereich 42A des Lenkelements 4A des kurveninneren Rades 2A ein Durchhängen des Kopplungselementes 5 zu verhindern.

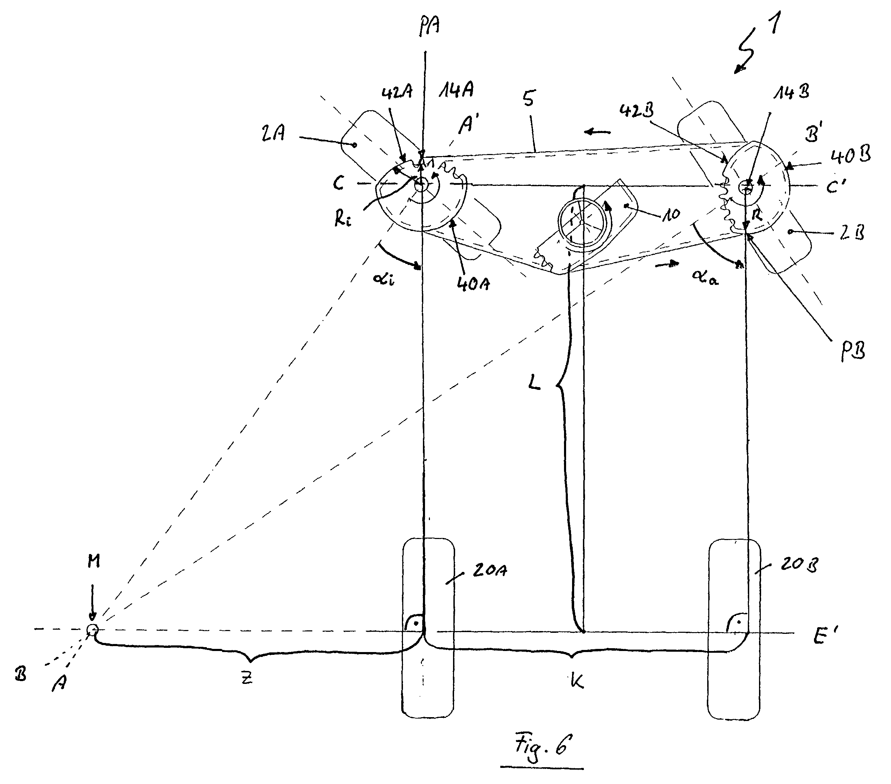

Abhängigkeiten zwischen Umfangsbereichen 40A, 42A, 40B, 42B der Lenkelemente 4A, 4B sollen nachfolgend anhand von Figur 6 erläutert werden.

Um ein Lenken des Fahrzeuges ohne Radieren der Räder 2A, 2B, 20A, 20B zu erreichen, müssen sich Verlängerungen der Radachsen AA', BB' der beiden lenkbaren Räder 2A, 2B und die Verlängerung der durch die beiden Vorderräder 20A, 20B gehenden Achse EE' für alle Lenkstellungen in einem Rollmittelpunkt M schneiden. Bei dem in Figur 6 dargestellten Beispiel erfolgt eine Verdrehung des Steuerelementes 10 und damit der Lenkelemente 4A, 4B entgegen dem Uhrzeigersinn. Das Fahrzeug beschreibt eine Rechtskurve um den Rollmittelpunkt M. Das Kopplungselement 5 bewegt sich bei dieser Lenkbewegung auf den stärker gekrümmten Umfangsbereich 40B des kurvenäußeren Rades 2B und auf den schwächer gekrümmten Umfangsbereich 42A des kurveninneren Rades 2A zu. Es ist sichergestellt, daß bei Lenkbewegungen der Lenkelemente 4A, 4B entgegen dem Uhrzeigersinn (Rechtskurve) das Kopplungselement 5 nur in diese Umfangsbereiche 42A, 40B neu eingreift. Entsprechendes gilt für die Umfangsbereiche 42B und 40A bei Lenkbewegungen der Lenkelemente 4A, 4B im Uhrzeigersinn. Das Lenkverhalten der beiden Räder 2A, 2B in einer Lenkrichtung ist daher ausschließlich durch einen der beiden Umfangsbereiche 40A; 42A, 40B; 42B der Lenkelemente 4A, 4B bestimmt.

Die Radachse BB' des kurvenäußeren Rades 2B schließt mit einer senkrecht auf der Vorderachse EE' stehenden Verbindungslinie einen Winkel $\alpha_a$ ein. Die Radachse AA' des kurveninneren Rades 2A schließt mit einer senkrecht auf der Vorderachse EE' stehenden Verbindungsline einen Winkel $\alpha_i$ ein. Eine die Drehpunkte 14A, 14B der Lenkelemente 4A, 4B verbindende Achse CC' verläuft parallel zur Vorderradachse E E', wobei diese Achsen einen Abstand L besitzen. Der Abstand der beiden Drehpunkte 14A, 14B beträgt K. Der senkrechte Abstand des Rollmittelpunktes M von der senkrecht auf der Radvorderachse EE' stehenden, den Drehpunkt 14A des kurveninneren Rades 2A durchlaufenden Verbindungslinie beträgt z.

Ausgehend von den genannten Größen ergibt sich für die beiden Winkel $\alpha_a$ und $\alpha_i$ aus Figur 6 folgende Beziehung:

$$\tan \alpha_a = \tan \alpha_i + K/L$$

$$\Rightarrow \tan \alpha_i = \tan \alpha_a - K/L \tag{1}$$

Für infinitesimale Änderungen $d\alpha_a$ des Winkels $\alpha_a$ und für infinitesimale Änderungen $d\alpha_i$ des Winkels $\alpha_i$ gelten folgende Beziehungen:

$$d\alpha_a = dx/R \tag{2}$$

$$d\alpha_i = dx/R_i \tag{3}$$

Wobei R den Abstand zwischen dem Drehpunkt 14B des radäußeren Lenkelementes 4B zu dem Punkt PB des Umfangbereiches 40B bestimmt, an welchem das Kopplungselement 5 gerade neu eingreift. $R_i$ bestimmt den Punkt PA des Umfangbereiches 42A des kurveninneren Lenkelementes 4A, an welchem das Kopplungselement 5 gerade neu eingreift. dx kennzeichnet eine infininetesimale translatorische Bewegung des Kopplungselementes 5. Durch Auflösen der Gleichung nach $\alpha_i$ und Ableiten der resultierenden Formel nach $\alpha_a$ ergibt sich folgende Beziehung:

$$\frac{d\alpha_i}{d\alpha_a} = \frac{1}{(\tan\alpha_a - K/L)^2 + 1} \cdot \frac{1}{\cos^2\alpha_a} \tag{4}$$

Einsetzen der Gleichungen (2) und (3) in Gleichung (4) ergibt folgende Beziehung zwischen R und $R_i$:

$$R_i = R \cdot \cos^2\alpha_a \cdot [(\tan \alpha_a - K/L)^2 + 1] \tag{5}$$

Hieraus kann für sämtliche Winkel $\alpha_a$ des kurvenäußeren Rades 2B der Abstand $R_i$ zwischen dem Umfangsbereich 42A und dem Drehmittelpunkt 14A des kurveninneren Lenkelementes 4A in Abhängigkeit vom jeweiligen Abstand des Umfangsbereiches 40B des kurvenäußeren Lenkelementes 4B zu dessen Drehmittelpunkt 14B berechnet werden. Der Abstand R zwischen dem Drehpunkt 14B und dem Umfangsbereich 40B des kurvenäußeren Lenkelementes 4B ist unabhängig von $\alpha_a$ wählbar, vorteilhafterweise ist dieser Abstand jedoch für den gesamten Umfangsbereich 40B konstant, woraus sich der Umfangsbereich 40B des kurvenäußeren Lenkelements 4B wie dargestellt als Kreislinie ergibt. Die Kontur der hier nicht näher erläuterten Umfangsbereiche 40A des kurveninneren Lenkelementes und des Umfangsbreiches 42B des kurvenäußeren Lenkelementes 4B ergibt sich aus der bereits angesprochenen Symmetriebedingung, wonach die beiden Lenkelemente 4A, 4B in Geradeausstellung symmetrisch bezüglich einer zwischen ihnen verlaufenden Achse sind.

Die stärker gekrümmten Umfangsbereiche 40A, 40B sind in den dargestellten Ausführungsbeispielen halbkreisförmig gewählt, wobei sich die Kontur der jeweils anderen Umfangsbereiche 42A, 42B aus Gleichung (5) ergibt.

Bezugszeichenliste

| | |
|---|---|
| 2A, 2B | Räder |
| 4A, 4B | Lenkelemente |
| 5, 5' | Kopplungselement |
| 6A, 5B | Gabel |
| 8A, 8B | Welle |
| 10, 10' | Steuerelement |
| 12 | Steuerrad |
| 13 | Drehachse des Steuerrades |
| 14A, 14B | Drehachsen der Lenkelemente |
| 20A, 20B | Vorderräder |
| 22A, 22B | Radaufstandspunkte |

| 40A, 40B, 42A, 42B | Umfangsbereiche der Lenkelemente |
|---|---|
| 44A, 44B | Zähne |
| 100 | Achskörper |
| 101, 102, 103 | Seiten des Steuerelementes |
| AA', BB', EE' | Radachsen |
| CC' | Verbindungsachse zwischen Drehpunkten der Lenkelemente |
| R, R$_i$ | Radien |
| M | Rollmittelpunkt |

**Patentansprüche**

1. Hinterachslenkvorrichtung mit
   zwei beabstandet angeordneten, lenkbaren Rädern (2A, 2B), von denen jedes mit einem drehbar gelagerten, wenigstens abschnittsweise gekrümmte Umfangsbereiche (40A, 42A, 40B, 42B) aufweisenden Lenkelement (4A, 4B) verdrehfest gekoppelt ist, wobei die beiden Lenkelemente (4A, 4B) mittels eines Kopplungselementes (5) zwangsgekoppelt sind, wobei die Lenkelemente (4A, 4B) zwei jeweils unterschiedlich gekrümmte Umfangsbereiche (40A, 40B, 42A, 42B) aufweisen, die jeweils stetig ineinander übergehen und wobei
   ein Steuerelement (10) zur Umsetzung von Drehbewegungen eines Steuerrades (12) in Translationsbewegungen des Kopplungselementes (5) in das Kopplungselement eingreift,
   **dadurch gekennzeichnet, daß** das Steuerelement (10) im wesentlichen rechteckförmig ausgebildet ist.

2. Vorrichtung nach Anspruch 1,
   **dadurch gekennzeichnet, daß**
   das Kopplungselement (5) eine Kette, ein Zahnriemen oder dgl. ist, wobei die Umfangsbereiche (40A, 40B, 42A, 42B) der Lenkelemente (4A, 4B) Strukturierungen (44A, 44B), insbesondere Zähne, zum Eingreifen des Kopplungselementes (5) aufweisen.

3. Vorrichtung nach Anspruch 2,
   **dadurch gekennzeichnet, daß**
   das Steuerelement (10) eine wenigstens annäherungsweise konstante Spannung des Kopplungselementes (5) bewirkt.

4. Vorrichtung nach einem der vorangehenden Ansprüche,
   **dadurch gekennzeichnet, daß**
   Radaufstandspunkte (22A, 22B) der Räder (2A, 2B) auf einer Drehachse (14A, 14B) des jeweiligen Lenkelements (4A, 4B) liegen.

5. Vorrichtung nach einem der vorangehenden Ansprüche,
   **dadurch gekennzeichnet, daß** die
   Lenkelemente (4A, 4B) in Geradeausstellung der Räder (2A, 2B) symmetrisch bzgl. einer parallel zur Fahrtrichtung verlaufenden Achse (DD') angeordnet sind.

6. Vorrichtung nach Anspruch 5,
   **dadurch gekennzeichnet, daß** die
   Umfangsbereiche (40A, 40B, 42A, 42B) Ellipsenabschnitte sind.

7. Vorrichtung nach Anspruch 5 oder 6,
   **dadurch gekennzeichnet, daß**
   jeweils einer der Umfangsbereiche (40A, 40B) der Lenkelemente (4A, 4B) als Halbkreis ausgebildet ist.

8. Vorrichtung nach einem der Ansprüche 5 bis 7,
   **dadurch gekennzeichnet, daß** das
   Kopplungselement (5) beim Lenken in eine Richtung nur in Abschnitte jeweils eines der Umfangsbereiche (40A, 40B, 42A, 42B) des jeweiligen Lenkelementes (4A, 4B) neu eingreift.

9. Vorrichtung nach einem der vorangehenden Ansprüche,
   **dadurch gekennzeichnet, daß**

Mittel zur Geschwindigkeitssteuerung mit dem Steuerelement (10) verbunden sind, wobei die maximal zulässige Geschwindigkeit mit zunehmender Verdrehung des Steuerelementes (10) abnimmt.

## Claims

1.  Rear axle steering device having
    two spaced, steerable wheels (2A, 2B), each of which is coupled in torsion-proof manner to a rotatably mounted steering element (4A, 4B) having peripheral regions (40A, 42A, 40B, 42B), at least some sections of which are curved, wherein the two steering elements (4A, 4B) are compulsorily coupled by means of a coupling element (5), wherein the steering elements (4A, 4B) comprise two peripheral regions (40A, 40B, 42A, 42B) of different curvatures, which constantly merge into each other in each case, and wherein a control element (10) for converting rotational movements of a control wheel (12) into translational movements of the coupling element (5) meshes into the coupling element,
    **characterised in that** the control element (10) has a substantially rectangular construction.

2.  A device according to Claim 1,
    **characterised in that** the coupling element (5) is a chain, a toothed belt or similar, where the peripheral regions (40A, 40B, 42A, 42B) of the steering elements (4A, 4B) comprise structured parts (44A, 44B), in particular teeth, for the meshing of the coupling element (5).

3.  A device according to Claim 2,
    **characterised in that** the control element (10) produces an at least approximately constant tension of the coupling element (5).

4.  A device according to one of the preceding Claims,
    **characterised in that** wheel contact points (22A, 22B) of the wheels (2A, 2B) lie on an axis of rotation (14A, 14B) of the respective steering element (4A, 4B).

5.  A device according to one of the preceding Claims,
    **characterised in that** the steering elements (4A, 4B) are disposed symmetrically with respect to an axis (DD') running parallel to the direction of travel in the straight position of the wheels (2A, 2B).

6.  A device according to Claim 5,
    **characterised in that** the peripheral regions (40A, 40B, 42A, 42B) are elliptical portions.

7.  A device according to Claim 5 or 6,
    **characterised in that** in each case one of the peripheral regions (40A, 40B) of the steering elements (4A, 4B) is constructed as a semi-circle.

8.  A device according to one of Claims 5 to 7,
    **characterised in that** when steering in one direction the coupling element (5) meshes only in some portions in each case of one of the peripheral regions (40A, 40B, 42A, 42B) of the respective steering element (4A, 4B).

9.  A device according to one of the preceding Claims,
    **characterised in that** means for controlling the speed are connected to the steering element (10), where the maximum permissible speed decreases as the torsion of the control element (10) increases.

## Revendications

1.  Direction d'essieu arrière comprenant

    -   deux roues directrices (2A, 2B) écartées l'une de l'autre, chacune étant couplée solidairement en rotation à un élément de guidage, monté à rotation et ayant des zones périphériques (40A, 42A, 40B, 42B) au moins courbes par segments,

    les deux éléments de guidage (4A, 4B) étant couplés de force par un élément de couplage (5),

des éléments de guidage (4A, 4B) ayant deux zones périphériques (40A, 40B, 42A, 42B) de courbures différentes qui se rejoignent de manière continue et

un élément de commande (10) assurant la transformation des mouvements de rotation appliqués au volant de direction (12) en des mouvements de translation de l'élément de couplage (5) pour agir sur l'élément de couplage,

**caractérisée en ce que**

l'élément de commande (10) a une forme essentiellement rectangulaire.

2. Dispositif selon la revendication 1,
   **caractérisé en ce que**
   l'élément de couplage (5) est une chaîne, une courroie dentée ou un moyen analogue et
   les zones périphériques (40A, 40B, 42A, 42B) des éléments de guidage (4A, 4B) ont des moyens de structure (44A, 44B) notamment des dents pour la prise de l'élément de couplage (5).

3. Dispositif selon la revendication 2,
   **caractérisé en ce que**
   l'élément de commande (10) produit une tension au moins approximativement constante de l'élément de couplage (5).

4. Dispositif selon l'une des revendications précédentes,
   **caractérisé en ce que**
   le point d'appui (22A, 22B) des roues (2A, 2B) est situé sur l'axe de rotation (14A, 14B) de l'élément de guidage respectif (4A, 4B).

5. Dispositif selon l'une des revendications précédentes,
   **caractérisé en ce que**
   les éléments de guidage (4A, 4B) sont symétriques ou parallèles à l'axe (DD') de la direction de déplacement lorsque les roues (2A, 2B) sont en position droite.

6. Dispositif selon la revendication 5,
   **caractérisé en ce que**
   les zones périphériques (40A, 40B, 42A, 42B) sont des segments d'ellipse.

7. Dispositif selon la revendication 5 ou 6,
   **caractérisé en ce que**
   chaque fois l'une des zones périphériques (40A, 40B) des éléments de guidage (4A, 4B) est en forme de demi-cercle.

8. Dispositif selon l'une des revendications 5 à 7,
   **caractérisé en ce que**
   l'élément de couplage (5), lorsqu'on guide dans une direction, ne pénètre de nouveau seulement dans les segments de chaque fois l'une des zones périphériques (40A, 40B, 42A, 42B) de l'élément de guidage respectif (4A, 4B).

9. Dispositif selon l'une des revendications précédentes,
   **caractérisé par**
   des moyens pour commander la vitesse, reliés à l'élément de commande (10), la vitesse maximale autorisée diminuant en fonction inverse de la rotation de l'élément de commande (10).

Fig. 1

Fig. 2

Fig. 3

Fig. 4

Fig. 5

Fig. 6